# EUROPEAN PATENT APPLICATION

(11) **EP 4 838 756 A1**
(43) Date of publication of application: **11.11.2026**
(21) Application number: 24915670.4
(22) Date of filing: 20.11.2024
(51) Int. Cl.: H02J 50/90, B60L 5/00, B60L 53/12, B60L 53/35, B60M 7/00, H02J 7/00, H02J 50/12, H02J 50/40

(54) **POWER TRANSMISSION DEVICE, MANUFACTURING METHOD, AND CONTACTLESS POWER SUPPLY SYSTEM**

(30) Priority: 05.01.2024 JP 2024000503
(71) Applicant: DENSO CORPORATION, Kariya-city, Aichi 448-8661 (JP)
(72) Inventor: SHIBANUMA, Mitsuru, Kariya- city, Aichi 448-8661 (JP); TAKAHASHI, Eisuke, Kariya- city, Aichi 448-8661 (JP); TAKAHASHI, Masaya, Kariya- city, Aichi 448-8661 (JP); NAKAYASHIKI, Yusei, Kariya- city, Aichi 448-8661 (JP); SUZUKI, Hironari, Kariya- city, Aichi 448-8661 (JP)
(74) Representative: TBK
(86) International application number: PCT/JP2024/041145
(87) International publication number: WO 2025/146747

(57) **Abstract**

A power transmission apparatus (10) wirelessly supplies power to a moving body (VE) including a power reception coil (Lr). The power transmission apparatus (10) includes a housing (30) that is disposed on a travel road surface (RS) and at least one power transmission coil (Ls) that is housed in the housing. The housing has an upper housing surface that supports the moving body and an internal space (33) formed under the upper housing surface. The at least one power transmission coil (Ls) is disposed inside the internal space. An overall area of the upper housing surface is greater than a top-view area of the at least one power transmission coil.

## Description

### [Cross-Reference to Related Application]

The present application is based on and claims the benefit of priority from Japanese Patent Application No. 2024-000503, filed on January 5, 2024, the description of which is incorporated herein by reference.

### [Technical Field]

The present disclosure relates to a power transmission apparatus, a manufacturing method, and a wireless power supply system.

### [Background Art]

Conventionally, there has been a system for wirelessly supplying power to an unmanned carrying vehicle (for example, PTL 1). In this system, a power transmission coil is disposed on a floor surface of a movement route. A power reception apparatus is wirelessly supplied power in a position in which a power reception coil opposes the power transmission coil.

### [Citation List]

### [Patent Literature]

[PTL 1] JP 2014-033524 A

### [Summary]

Incidentally, a position of the power reception coil in the unmanned carrying vehicle varies depending on specifications. Meanwhile, in some cases, a width of a movement route in a facility in which the unmanned carrying vehicle travels may be limited to a width allowing the unmanned carrying vehicle to travel. Therefore, in a case in which a power transmission apparatus is set in a facility, a power transmission apparatus that is capable of freely arranging a position of a power transmission coil to align with the position of the power reception coil is desired.

The present disclosure can be implemented according to following aspects.

A first aspect of the present disclosure provides a power transmission apparatus that wirelessly supplies power to a moving body including a power reception coil. The power transmission apparatus includes a housing that is disposed on a travel road surface and at least one power transmission coil that is housed in the housing. The housing has an upper housing surface that supports the moving body and an internal space formed under the upper housing surface. The at least one power transmission coil is disposed inside the internal space. An overall area of the upper housing surface is greater than a top-view area of the at least one power transmission coil.

According to this aspect, the power transmission apparatus can be easily set up by the housing being disposed on the travel road surface. In addition, because the overall area of the upper housing surface is greater than the top-view area of the at least one power transmission coil, a position of the power transmission coil relative to the housing can be adjusted. Therefore, the position of the power transmission coil can be freely arranged to align with a position of the power reception coil.

A second aspect of the present disclosure provides a manufacturing method for a power transmission apparatus that wirelessly supplies power to a moving body including a power reception coil. The manufacturing method includes:a first step of preparing a pre-adjustment housing that includes (a) a housing that has a lower housing surface, an upper housing surface that is disposed above the lower housing surface, and an internal space that is defined by the lower housing surface and the upper housing surface, and (b) a plurality of support members that are disposed between the lower housing surface and the upper housing surface, and are for supporting the upper housing surface, the plurality of support members filling the internal space; a second step of marking, on the pre-adjustment housing, an opposing position on the lower housing surface opposing the power reception coil when the moving body travels along a movement route prescribed in advance; and a third step of removing, among the plurality of support members, some of the support members that are disposed in the opposing position from the internal space and disposing a power transmission coil below the opposing position.

According to this aspect, the power transmission coil can be disposed to align with various positions of the power reception coil relative to the movement route. Therefore, the power transmission apparatus that suppresses positional shift of the power transmission coil relative to the power reception coil can be provided.

A third aspect of the present disclosure provides a wireless power supply system that wirelessly supplies power to a moving body including a power reception coil. The wireless power supply system includes a first power transmission apparatus and a second power transmission apparatus differing from the first power transmission apparatus. The first power transmission apparatus and the second power transmission apparatus each include a housing that is disposed on a travel road surface and at least one power transmission coil that is housed in the housing. The housing has a lower housing surface that is disposed along the travel road surface, an upper housing surface that is disposed above the lower housing surface and supports the moving body and an internal space that is defined by the lower housing surface and the upper housing surface. The at least one power transmission coil is disposed inside the internal space. A size of the housing of the first power transmission apparatus is the same as a size of the housing of the second power transmission apparatus. A position on the lower housing surface of the at least one power transmission coil provided in the first power transmission apparatus and a position on the lower housing surface of the at least one power transmission coil provided in the second power transmission apparatus differ from each other.

According to this aspect, the position on the lower housing surface of the power transmission coil provided in the first power transmission apparatus and the position on the lower housing surface of the power transmission coil provided in the second power transmission apparatus differ from each other. Therefore, the power transmission apparatus that accommodates two types of power reception apparatuses of which positions of the power reception coils relative to the movement route differ from each other while using a common housing can be provided.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is a diagram for explaining a wireless power supply system;
Fig. 2 is a plan view of a layout of a warehouse;
Fig. 3 is a bottom view of a bottom surface of an unmanned carrying vehicle;
Fig. 4 is a circuit diagram illustrating the wireless power supply system;
Fig. 5 is a perspective view of a structure of a power transmission apparatus;
Fig. 6 is a side view of the power transmission apparatus omitting a side surface;
Fig. 7 is a plan view of the power transmission apparatus omitting an upper housing surface;
Fig. 8 is a flowchart illustrating manufacturing steps for the power transmission apparatus;
Fig. 9 is a diagram for explaining a manufacturing method for the power transmission apparatus;
Fig. 10 is a circuit diagram illustrating a power transmission apparatus according to a second embodiment;
Fig. 11 is a plan view of the power transmission apparatus according to the second embodiment omitting an upper housing surface;
Fig. 12 is a flowchart illustrating manufacturing steps for the power transmission apparatus according to the second embodiment;
Fig. 13 is a plan view of a layout of a warehouse according to a third embodiment;

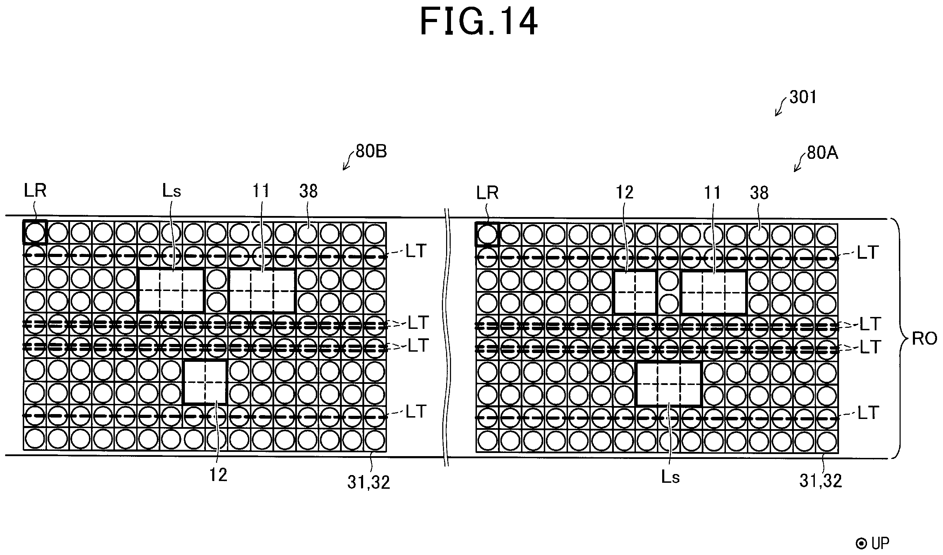

Fig. 14 is a plan view of a first power transmission apparatus and a second power transmission apparatus omitting upper housing surfaces; and
Fig. 15 is a circuit diagram illustrating a power transmission resonant circuit according to another embodiment.

### [Description of Embodiments]

### A. First embodiment

### A1. Overview of a wireless power supply system

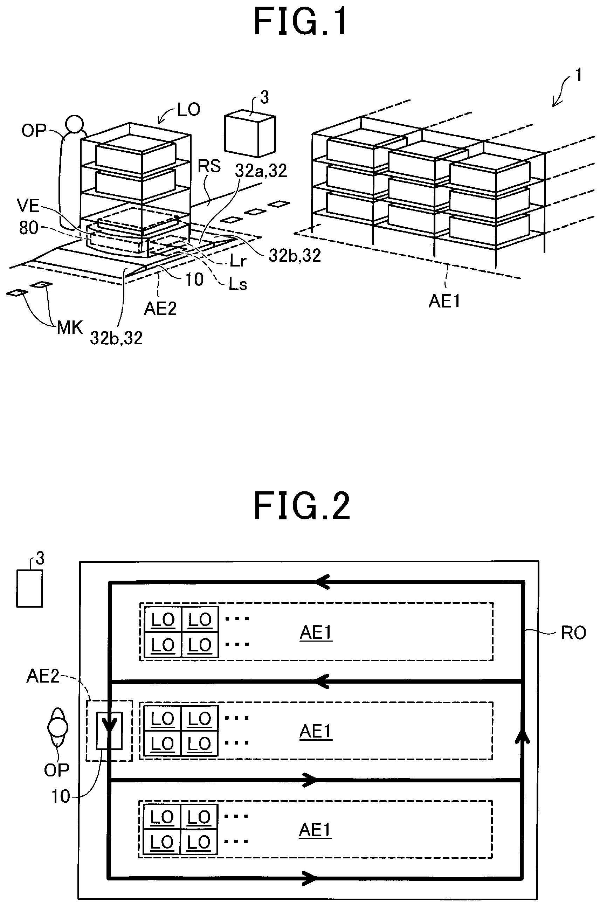

As shown in Fig. 1, a wireless power supply system 1 includes a management apparatus 3, a power transmission apparatus 10, and a power reception apparatus 80. The power transmission apparatus 10 performs wireless power supply to the power reception apparatus 80. According to the present embodiment, the wireless power supply system 1 is disposed inside a warehouse. The power transmission apparatus 10 is disposed on a floor surface RS serving as a travel road surface of the warehouse. The power reception apparatus 80 is mounted in an unmanned carrying vehicle VE serving as a moving body traveling on the floor surface RS. The unmanned carrying vehicle VE is an automatic guided vehicle (AGV) that transports load (LO). The unmanned carrying vehicle VE travels based on instructions from the management apparatus 3.

As shown in Fig. 2, the warehouse is provided with a load placement area AE1 and a work area AE2. The load placement area AE1 is an area in which the load LO is arranged. The work area AE2 is an area in which the unmanned carrying vehicle VE on which the load LO is loaded stops to allow an operator OP to work. The unmanned carrying vehicle VE travels along a movement route RO prescribed in advance.

As shown in Fig. 1, the load LO has a rack and cargo stored in the rack. The unmanned carrying vehicle VE transports a target load LO and stops in the work area AE2. The operator OP removes a target cargo from the load LO that is stopped in work area AE2. Alternatively, the operator OP stores a target cargo in the load LO that is stopped in the work area AE2. Subsequently, the unmanned carrying vehicle VE moves to the load placement area AE1.

A transmission coil Ls is disposed along the movement route RO. According to the present embodiment, the power transmission coil Ls is disposed in the work area AE2. Therefore, wireless power supply from the power transmission apparatus 10 to the power reception apparatus 80 is capable of being performed using a period during which the operator OP performs the work of removing the cargo and storing the cargo.

The unmanned carrying vehicle VE travels along a plurality of position markers MK disposed on the floor surface RS. According to the present embodiment, the position marker MK is a visible mark. For example, a two-dimensional code is capable of being used as the position marker MK. The position marker MK contains coordinate information.

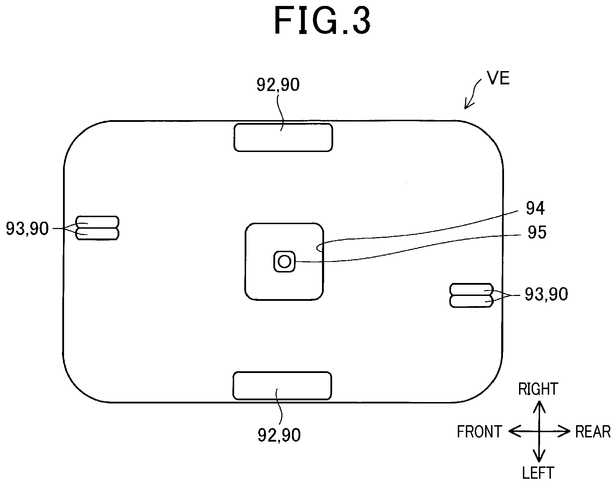

As shown in Fig. 3, the unmanned carrying vehicle VE includes a plurality of vehicle wheels 90, an opening portion 94, and a marker sensor 95. Directions indicated in Fig. 3 are directions with reference to the unmanned carrying vehicle VE. The plurality of vehicle wheels 90 include a pair of drive wheels 92 and a pair of steered wheels 93. The pair of drive wheels 92 are respectively disposed in end portions in a left-right direction in a center position in a front-rear direction of the unmanned carrying vehicle VE. The pair of drive wheels 92 rotates due to driving force transmitted from a motor-generator (not shown). As a result, the unmanned carrying vehicle VE moves forward or backward. The pair of drive wheels 92 and the pair of steered wheels 93 are driven based on commands from a control circuit 86, described hereafter. The pair of steered wheels 93 are respectively disposed in end portions in the front-rear direction of the unmanned carrying vehicle VE. In addition, the pair of steered wheels 93 are arranged in point symmetry relative to a center of the unmanned carrying vehicle VE. When turning, the unmanned carrying vehicle VE generates a difference in rotational speed between the pair of drive wheels 92. In addition, when pivoting, the unmanned carrying vehicle VE sets rotation directions of the two drive wheels 92 of the pair of drive wheels 92 to be opposite of each other.

The opening portion 94 is disposed in a center of a bottom surface of the unmanned carrying vehicle VE. The marker sensor 95 is disposed in a center of the opening portion 94. The marker sensor 95 includes a camera. The marker sensor 95 captures an image of the position marker MK and acquires the information contained in the position marker MK.

### A2. Electrical configuration of the wireless power supply system

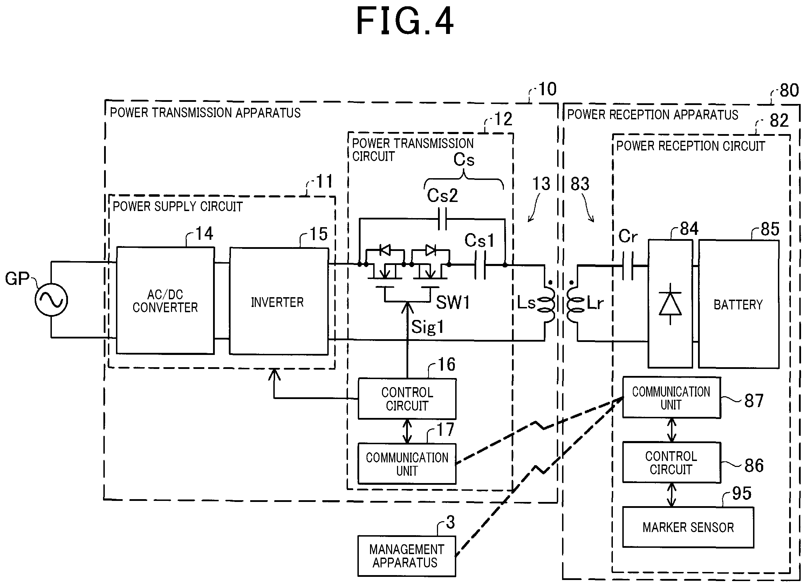

As shown in Fig. 4, the power transmission apparatus 10 includes a power supply circuit 11 serving as an electrical circuit and a power transmission circuit 12 serving as an electrical circuit, in addition to the power transmission coil Ls described above. The power supply circuit 11 and the power transmission circuit 12 are circuits for supplying power to the power transmission coil Ls.

The power supply circuit 11 has an alternating current/direct current (AC/DC) converter 14 and an inverter 15. The AC/DC converter 14 converts commercial power supplied from a system power supply GP to a direct-current voltage that is a target voltage. The inverter 15 converts the direct-current voltage supplied from the AC/DC converter 14 to an alternating-current voltage at an operating frequency. The power supply circuit 11 is controlled by a control circuit 16 described hereafter.

The power transmission circuit 12 has a power transmission resonant capacitor Cs serving as a resonant capacitor, a first switch SW1, the control circuit 16, and a communication unit 17. The power transmission resonant capacitor Cs is electrically connected to the power transmission coil Ls. The power transmission resonant capacitor Cs includes a first power transmission capacitor Cs1 and a second power transmission capacitor Cs2. The power transmission resonant capacitor Cs is capable of adjusting a capacitance value between a first capacitance value and a second capacitance value greater than the first capacitance value. A capacitance value of the first power transmission capacitor Cs1 is greater than a capacitance value of the second power transmission capacitor Cs2. The first switch SW1, the first power transmission capacitor Cs1, and the power transmission coil Ls are connected in series in this order. The second power transmission capacitor Cs2 is connected in parallel to a connection body of the first switch SW1 and the first power transmission capacitor Cs1.

The first switch SW1 is a bidirectional switch in which respective source electrodes of two transistors are connected. A switching signal Sig1 is input to the first switch SW1 from the control circuit 16. When a high-level switching signal Sig1 is input to the first switch SW1, the first switch SW1 is set to a conductive state, and the first power transmission capacitor Cs1 is set to a conductive state in which a current flows thereto. Here, a combined capacitance of the first power transmission capacitor Cs1 and the second power transmission capacitor Cs2, and an inductance of the power transmission coil Ls are set to values causing a resonant state at the operating frequency. As a result, when the first switch SW1 is in the conductive state, a power transmission resonant circuit 13 that is a series resonant circuit is formed by the first power transmission capacitor Cs1, the second power transmission capacitor Cs2, and the power transmission coil Ls. Conversely, when a low-level switching signal Sig1 is input to the first switch SW1, the first switch SW1 is set to a non-conductive state and the first power transmission capacitor Cs1 is set to a non-conductive state. In addition, a resonant frequency of the resonant circuit formed by the second power transmission capacitor Cs2 in the conductive state and the power transmission coil Ls shifts from the operating frequency. Furthermore, because the capacitance value of the second power transmission capacitor Cs2 is less than the capacitance value of the first power transmission capacitor Cs1, when the first switch SW1 is in the non-conductive state, an impedance of the power transmission circuit 12 relative to the alternating-current power that is input increases, and a current flowing through the power transmission resonant circuit 13 is suppressed. Here, the above-described first capacitance value is a capacitance value of the power transmission resonant capacitor Cs when the first switch SW1 is in the non-conductive state. The above-described second capacitance value is a capacitance value of the power transmission resonance capacitor Cs when the first switch SW1 is in the conductive state.

The communication unit 17 is connected to the control circuit 16 to be capable of communication. The communication unit 17 has an antenna for wireless communication (not shown) and performs wireless communication with a communication unit 87, described hereafter, provided in the power reception apparatus 80.

The power reception apparatus 80 includes a power reception circuit 82, in addition to the above-described power reception coil Lr and the marker sensor 95. The power reception circuit 82 includes a power reception capacitor Cr, a rectifier circuit 84, a battery 85, the control circuit 86, and the communication unit 87. The power reception capacitor Cr is connected in series to the power reception coil Lr. A power reception resonant circuit 83 that is a series resonant circuit is configured by the power reception coil Lr and the power reception capacitor Cr. The rectifier circuit 84 rectifies the alternating-current power received by the power reception resonant circuit 83 and supplies the rectified direct-current power to the battery 85. The battery 85 stores the supplied power. Power is supplied from the battery 85 to the motor-generator.

The communication unit 87 and the marker sensor 95 are each connected to the control circuit 86 to be capable of communication. The communication unit 87 has an antenna for wireless communication (not shown) and communicates wirelessly with each of the communication unit 17 of the power transmission apparatus 10 and the management apparatus 3.

When alternating-current power is supplied to the power transmission coil Ls, the power reception apparatus 80 is wirelessly supplied power due to magnetic resonance between the power transmission coil Ls and the power reception coil Lr. As described above, the alternating-current power output from the power reception resonant circuit 83 is rectified by the rectifier circuit 84 and supplied to the battery 85.

The control circuit 16 sets the power transmission coil Ls to either of a standby state and a power supply state. Specifically, the standby state refers to a state in which the power transmission resonant circuit 13 is set to a non-resonant state by the first switch SW1 being set to the non-conductive state. Conversely, the power supply state refers to a state in which the power transmission resonant circuit 13 is set to a resonant state by the first switch SW1 being set to the conductive state, and a current for power supply flows to the power transmission coil Ls. In the power supply state, the current flowing to the power transmission coil Ls is greater than the current flowing to the power transmission coil Ls in the standby state.

According to the present embodiment, the power transmission apparatus 10 sets the power transmission coil Ls to the power supply state when the unmanned carrying vehicle VE is positioned in the work area AE2. As a result, power saving in the power transmission apparatus 10 can be achieved.

The management apparatus 3 commands a target unmanned carrying vehicle VE to move to the work area AE2. Upon receiving the command from the management apparatus 3, the unmanned carrying vehicle VE moves to the work area AE2 along the movement route RO specified by the management apparatus 3 by detecting the position marker MK with the marker sensor 95. When the unmanned carrying vehicle VE enters the work area AE2, the power reception apparatus 80 transmits a signal instructing start of power transmission to the power transmission apparatus 10. Upon receiving the signal instructing the start of power transmission, the power transmission apparatus 10 switches the power transmission resonant circuit 13 from the standby state to the power supply state. As a result, wireless power supply to the power reception apparatus 80 is performed.

When work by the operator OP is completed, the management apparatus 3 commands the power reception apparatus 80 to move to the load placement area AE1. Upon receiving the command from the management apparatus 3, the power reception apparatus 80 transmits a signal indicating end of power transmission to the power transmission apparatus 10. Upon receiving the signal instructing the end of power transmission, the power transmission apparatus 10 switches the power transmission resonant circuit 13 from the power supply state to the standby state. The unmanned carrying vehicle VE moves to the load placement area AE1 along the movement route RO specified by the management apparatus 3 by detecting the position marker MK with the marker sensor 95.

Here, a condition under which the power transmission resonant circuit 13 switches the state between the standby state and the power supply state is not limited to that described above. According to another embodiment, the power transmission resonant circuit 13 may switch the state from the standby state to the power supply state under a condition that the power transmission apparatus 10 detects that the power reception apparatus 80 is positioned within a positional range in which wireless power supply is possible, without involving communication with the management apparatus 3. Specifically, in a case in which the power reception coil Lr that is generating a magnetic flux approaches the power transmission coil Ls and the power reception coil Lr enters the positional range in which wireless power supply is possible, a magnetic flux linking with the power transmission coil Ls increases. Therefore, the power transmission resonant circuit 13 may switch the state from the standby state to the power supply state by detecting a change in a magnitude of the magnetic flux linked with the power transmission coil Ls. Here, the power transmission apparatus 10 may separately include a coil for magnetic flux detection rather than using the power transmission coil Ls as a coil for detecting changes in the magnitude of the magnetic flux. In addition, the changes in the magnitude of the magnetic flux can be detected as changes in voltage or changes in current.

### A3. Structure of the power transmission apparatus

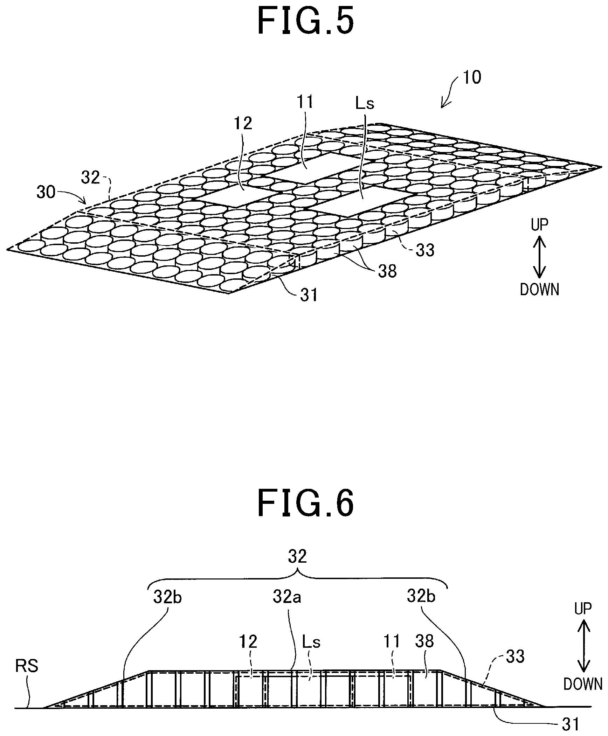

As shown in Fig. 5, the power transmission apparatus 10 includes a housing 30 and a plurality of support members 38, in addition to the above-described configuration. The housing 30 houses the power transmission coil Ls. The housing 30 has a lower housing surface 31, an upper housing surface 32, and an internal space 33. As shown in Fig. 6, the upper housing surface 32 is disposed above the lower housing surface 31 in a vertical direction. The internal space 33 is formed under the upper housing surface 32. The internal space 33 is a space defined by the lower housing surface 31 and the upper housing surface 32. The power transmission coil Ls, the power supply circuit 11, the power transmission circuit 12, and the plurality of support members 38 are arranged inside the internal space 33. In the description hereafter, the power transmission coil Ls, the power supply circuit 11, and the power transmission circuit 12 may collectively be referred to as arranged components.

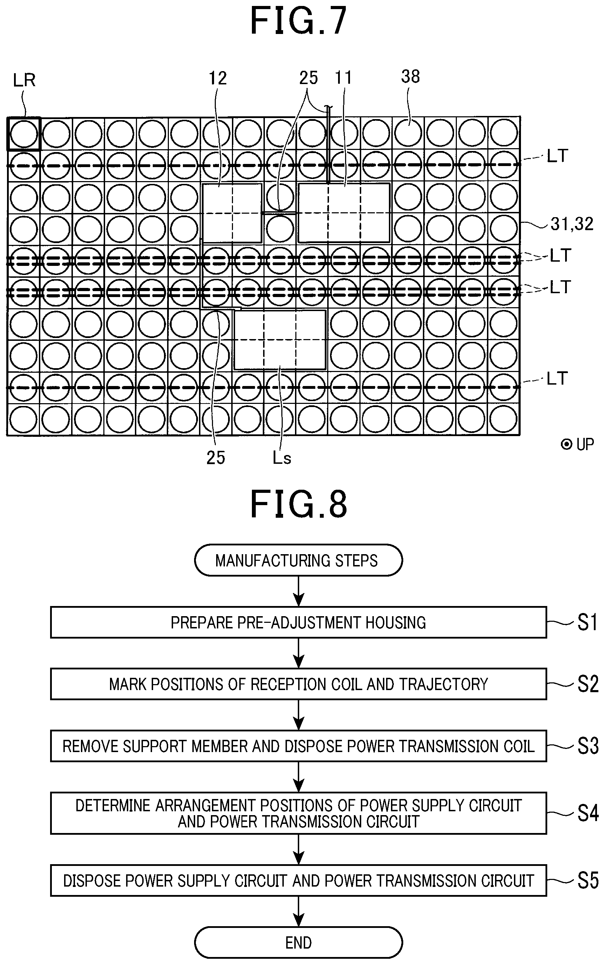

As shown in Fig. 7, the arranged components are arranged so as not to overlap each other in the up-down direction. As a result, a thickness in the up-down direction of the power transmission apparatus 10 can be made thin.

As shown in Fig. 6, the upper housing surface 32 includes a main upper surface portion 32a and two sloped upper surface portions 32b. The two sloped upper surface portions 32b are each disposed in an opposing manner with the main upper surface portion 32a therebetween. The main upper surface portion 32a is disposed substantially parallel to the lower housing surface 31. Conversely, the two sloped upper surface portions 32b are disposed so as to be sloped relative to the lower housing surface 31. The lower housing surface 31 is arranged along the floor surface RS on top of the floor surface RS. Therefore, the power transmission apparatus 10 is capable of being easily set up. The upper housing surface 32 supports the unmanned carrying vehicle VE. Specifically, the unmanned carrying vehicle VE travels on the upper housing surface 32. The main upper surface portion 32a is above the floor surface RS in the vertical direction. In addition, the two sloped upper surface portions 32b function as a slope for the unmanned carrying vehicle VE to ascend onto the main upper surface portion 32a or a slope for the unmanned carrying vehicle VE to descend from the main upper surface portion 32a.

As shown in Fig. 7, an overall area of the lower housing surface 31 and the upper housing surface 32 is greater than a top-view area of the power transmission coil Ls. In addition, according to the present embodiment, the overall area of the upper housing surface 32 is greater than a size that is a sum of a top-view area of the power supply circuit 11 and a top-view area of the power transmission circuit 12 further added to the top-view area of the power transmission coil Ls. As a result, a degree of freedom in the arrangement of the power transmission coil Ls, the power supply circuit 11, and the power transmission circuit 12 within the housing 30 can be improved. Here, the "top-view area" refers to a size of the arranged component when the upper housing surface 32 is looked down upon from above the upper housing surface 32, along a normal direction of the lower housing surface 31.

The system power supply GP and the power supply circuit 11 are electrically connected by a cable 25 serving as wiring. The power supply circuit 11 and the power transmission circuit 12 are electrically connected by the cable 25. The power transmission circuit 12 and the power transmission coil Ls are electrically connected by the cable 25.

The plurality of support members 38 is disposed under the upper housing surface 32, specifically between the lower housing surface 31 and the upper housing surface 32, and supports the upper housing surface 32. According to the present embodiment, the support member 38 has a circular columnar shape. According to the present embodiment, a material of the support member 38 is an elastomer. As a result, vibrations generated when the unmanned carrying vehicle VE travels over the power transmission apparatus 10 can be reduced. Here, the shape and the material of the support member 38 are not limited thereto. The plurality of support members 38 are arranged in an area of the overall area of the upper housing surface 32 excluding an occupied area of the upper housing surface 32 occupied by the power transmission coil Ls and occupied areas of the upper housing surface 32 occupied by the electrical circuits. As a result, strength against an applied load received by the upper housing surface 32 can be improved. Here, the occupied area refers to an area of a shadow cast by a projected arranged component when the arranged component is projected onto the upper housing surface 32 along the normal direction of the lower housing surface 31.

The top-view area of the power transmission coil Ls is set to be an area in units of unit area LR dividing the overall area of the lower housing surface 31 into a plurality of areas. According to the present embodiment, the unit area LR is a square. Specifically, a length of a long side of the power transmission coil Ls is an integer multiple of a length of one side of the unit area LR. A length of a short side of the power transmission coil Ls is an integer multiple of the length of one side of the unit area LR. Here, the power transmission coil Ls is formed by a coil wire being wound. The size of the power transmission coil Ls refers to a size of a rectangle that encloses and touches the power transmission coil Ls. Here, the power transmission coil Ls is not limited an aspect in which the power transmission coil Ls is formed by the coil wire being wound. An aspect in which the power transmission coil Ls is formed on a printed circuit board by printed wiring is also possible. The size of the power transmission coil Ls in this case is a size of the printed circuit board forming the power transmission coil Ls.

The top-view area of the power supply circuit 11 is set to be an area in units of unit area LR. Specifically, a length of a long side of the power supply circuit 11 is an integer multiple of the length of one side of the unit area LR. A length of a short side of the power supply circuit 11 is an integer multiple of the length of one side of the unit area LR. According to the present embodiment, the size of the power supply circuit 11 refers to a size of a rectangle that encloses and touches a substrate on which electrical components configuring the power supply circuit 11 are mounted.

The top-view area of the power transmission circuit 12 is set to be an area in units of unit area LR. Specifically, a length of each side of the power transmission circuit 12 is an integer multiple of the length of one side of the unit area LR. According to the present embodiment, the size is of a rectangle that encloses and touches a substrate on which electrical components configuring the power transmission circuit 12 are mounted. As a result of the power transmission coil Ls, the power supply circuit 11, and the power transmission circuit 12 being set to sizes in units of unit area LR, positions of the arranged components relative to the lower housing surface 31 can be more easily adjusted.

In addition, each support member 38 is positioned in a unit area LR. As a result, the support members 38 can be arranged in an area of the overall area of the lower housing surface 31 excluding the areas in which the arranged components are arranged. Consequently, when an applied load is exerted onto the upper housing surface 32, because the upper housing surface 32 can be supported by the plurality of support members 38, strength of the power transmission apparatus 10 can be improved.

As shown in Fig. 2, according to the present embodiment, the unmanned carrying vehicle VE travels straight ahead over the power transmission apparatus 10. Therefore, as shown in Fig. 7, when the unmanned carrying vehicle VE travels along the movement route RO, a trajectory LT formed by the vehicle wheels 90 is a straight line. The support members 38 are arranged in positions overlapping the trajectory LT in a top view. The power transmission coil Ls and the electrical circuits are arranged in positions excluding the trajectory LT in the top view. As a result, when the unmanned carrying vehicle VE travels over the upper housing surface 32, a load received by the arranged components can be reduced and strength when an applied load is exerted onto the upper housing surface 32 of the power transmission apparatus 10 can be improved.

### A4. Manufacturing method for the power transmission apparatus

A width of a passage in a warehouse serving as the movement route RO on which the unmanned carrying vehicle VE travels is limited to a width allowing the unmanned carrying vehicle VE to travel. In addition, the position of the power transmission coil Lr in the unmanned carrying vehicle VE varies depending on specifications. Therefore, the position of the power transmission coil Ls is required to be arranged to align with the position of the power reception coil Lr. In manufacturing steps actualizing the manufacturing method for the power transmission apparatus 10 described next, measures are taken to arrange the power transmission coil Ls to correspond with the position of the power reception coil Lr.

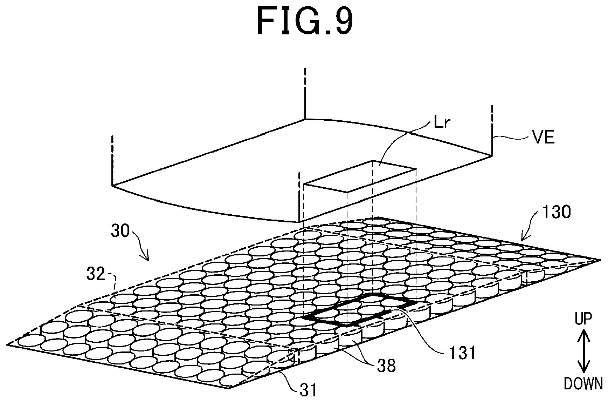

At a first step S1 in Fig. 8, a pre-adjustment housing 130 is prepared. As shown in Fig. 9, the pre-adjustment housing 130 has the housing 30 and the plurality of support members 38. A main difference between the power transmission apparatus 10 and the pre-adjustment housing 130 is that, while the arranged components are disposed in the power transmission apparatus 10, the arranged components are not disposed in the pre-adjustment housing 130. The internal space 33 of the pre-adjustment housing 130 is filled with the support members 38. The support member 38 is disposed in the unit area LR.

At a second step S2 in Fig. 8, an opposing position 131 that is a position on the lower housing surface 31 of the power transmission apparatus 10 subject to power transmission opposing the power reception coil Lr and a position on the lower housing surface 31 opposing the trajectory LT are marked on the pre-adjustment housing 130. As shown in Fig. 9, according to the present embodiment, the opposing position 131 and the position of the trajectory LT are marked on the pre-adjustment housing 130 by the unmanned carrying vehicle VE being disposed above the pre-adjustment housing 130 in a state in which the pre-adjustment housing 130 is actually disposed on the movement route RO in the warehouse. In Fig. 9, illustration of the position of the trajectory LT is omitted. Here, the method is not limited to that in which the pre-adjustment housing 130 is actually disposed. For example, the opposing position 131 and the position of the trajectory LT may be marked on the pre-adjustment housing 130 through collation between a blueprint of the warehouse and a blueprint of the unmanned carrying vehicle VE.

At a third step S3 in Fig. 8, among the plurality of support members 38 filling the pre-adjustment housing 130, some of the support members 38 that are disposed in the opposing position 131 are removed from the internal space 33 and the power transmission coil Ls is disposed in the opposing position 131. At step S4, arrangement positions of the power supply circuit 11 and the power transmission circuit 12 are determined in any area of the lower housing surface 31 excluding the position opposing the trajectory LT.

At step S5, after the support members 38 disposed in the determined arrangement positions are removed from the internal space 33, the power supply circuit 11 and the power transmission circuit 12 are disposed on the lower housing surface 31. Subsequently, the power transmission coil Ls, the power transmission circuit 12, and the power supply circuit 11 are electrically connected to one another by the cable 25. The upper housing surface 32 is fixed and the power transmission apparatus 10 is completed.

According to the first embodiment described above, the power transmission apparatus 10 includes the housing 30 and the power transmission coil Ls. The housing 30 has the upper housing surface 32 and the internal space 33. The power transmission coil Ls is disposed inside the internal space 33. The overall area of the upper housing surface 32 is greater than the top-view area of the power transmission coil Ls. Therefore, the power transmission apparatus 10 can be easily set up by the housing 30 being disposed on the floor surface RS. In addition, because the overall area of the upper housing surface 32 is greater than the top-view area of the power transmission coil Ls, the position of the power transmission coil Ls relative to the housing 30 can be adjusted. Therefore, the position of the power transmission coil Ls can be freely arranged to align with the position of the power reception coil Lr.

Furthermore, the power transmission apparatus 10 includes the power supply circuit 11 and the power transmission circuit 12 disposed in the internal space 33, as well as the plurality of support members 38. The power supply circuit 11 and the power transmission circuit 12 are circuits for supplying power to the power transmission coil Ls. The plurality of support members 38 are arranged in the area of the overall area of the upper housing surface 32 excluding the occupied area of the upper housing surface 32 occupied by the power transmission coil Ls and the occupied areas of the upper housing surface 32 occupied by the power supply circuit 11 and the power transmission circuit 12. The plurality of support members 38 are arranged in the area excluding the power transmission coil Ls, the power supply circuit 11, and the power transmission circuit 12. Therefore, the strength of the power transmission apparatus 10 when an applied load is exerted onto the upper housing surface 32 can be improved.

In addition, because the power supply circuit 11 is disposed in the internal space 33, the power transmission apparatus 10 can be easily disposed compared to when the power supply circuit 11 is disposed outside the housing 30. Furthermore, because the power transmission circuit 12 including the power transmission resonant capacitor Cs is disposed in the internal space 33, the power transmission apparatus 10 can be easily disposed compared to when the power transmission circuit 12 is disposed outside the housing 30.

In addition, the power transmission resonant capacitor Cs includes the first power transmission capacitor Cs1 and the second power transmission capacitor Cs2. The control circuit 16 switches the state of the power transmission coil Ls between the power supply state and the standby state by switching the capacitance of the power transmission resonant capacitor Cs between a first capacitance and a second capacitance. As a result, the state of the power transmission coil Ls can be switched by the capacitance of the power transmission resonant capacitor Cs being changed.

Furthermore, the top-view area of the power transmission coil Ls is set to be a size in units of unit area LR. Each of the plurality of support members 38 is disposed in a unit area LR. As a result, the plurality of support members 38 can be arranged in an area of the lower housing surface 31 excluding the power transmission coil Ls. Therefore, when an applied load is exerted onto the upper housing surface 32, because the upper housing surface 32 is capable of being supported by the plurality of support members 38, strength of the power transmission apparatus 10 can be improved. Moreover, because the arrangement position of the power transmission coil Ls on the lower housing surface 31 can be determined to be compatible with the unit area 31, manufacturing efficiency of the power transmission apparatus 10 can be improved.

In addition, the size of the power supply circuit 11 is set such that the top-view area of the power supply circuit 11 is an area in units of unit area LR. As a result, the plurality of support members 38 can be arranged in an area of the lower housing surface 31 excluding the power supply circuit 11. Therefore, when an applied load is exerted onto the upper housing surface 32, because the upper housing surface 32 can be supported by the plurality of support members 38, strength of the power transmission apparatus 10 can be improved.

Furthermore, the power transmission coil Ls is disposed along the movement route RO of the unmanned carrying vehicle VE. As a result, power can be wirelessly supplied in a state in which the power transmission coil Ls and the power reception coil Lr overlap. Consequently, power supply efficiency can be improved.

In addition, the support members 38 are disposed in positions overlapping the trajectory LT in the top view when the unmanned carrying vehicle VE travels along the movement route RO. The power transmission coil Ls, the power supply circuit 11, and the power transmission circuit 12 are arranged in positions excluding the trajectory LT in the top view. Therefore, the load received by the power transmission coil Ls, the power supply circuit 11, and the power transmission circuit 12 can be reduced, and strength when an applied load is exerted onto the upper housing surface 32 of the power transmission apparatus 10 can be improved.

Furthermore, the manufacturing method for the power transmission apparatus 10 includes the first step S1, the second step S2, and the third step S3. At the first step S1, the pre-adjustment housing 130 is prepared. At the second step S2, the opposing position 131 on the lower housing surface 31 opposing the power reception coil Lr is marked on the pre-adjustment housing 130. At the third step S3, among the plurality of support members 38 filling the pre-adjustment housing 130, some of the support members 38 that are disposed in the opposing position 131 are removed from the internal space 33 and the power transmission coil Ls is disposed in the opposing position 131. Therefore, when the housing 30 is disposed on the movement route RO, the power transmission coil Ls can be disposed to align with the position of the power reception coil Lr. Consequently, the power transmission apparatus 10 that suppresses positional shift of the power transmission coil Ls relative to the power reception coil Lr can be provided.

### B. Second embodiment

A main difference between a power transmission apparatus 210 according to a present embodiment and the power transmission apparatus 10 according to the first embodiment is that the power transmission apparatus 210 includes two power transmission resonant circuits 13. Configurations and processing steps identical to those according to the above-described embodiment are given the same reference numbers. Detailed descriptions are omitted as appropriate.

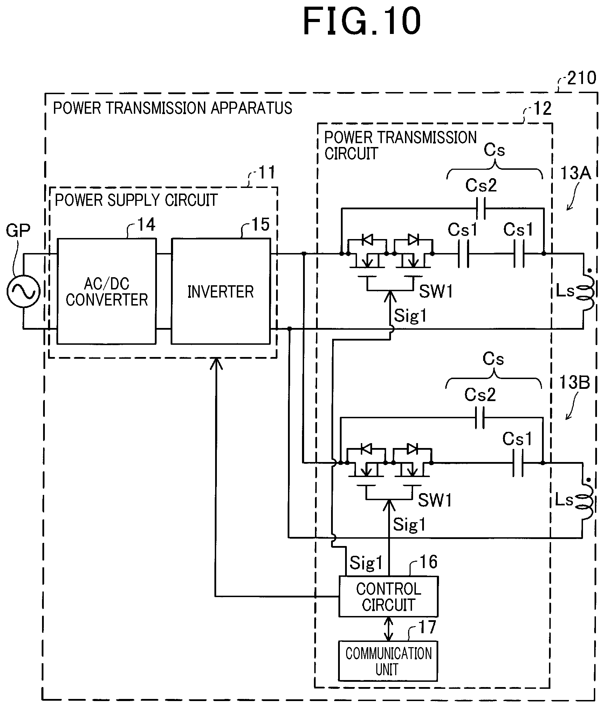

As shown in Fig. 10, the power transmission apparatus 210 includes two power transmission resonant circuits 13. To distinguish between the two power transmission resonant circuits 13, one is referred to as a first power transmission resonant circuit 13A and the other is referred to as a second power transmission resonant circuit 13B. The first power transmission resonant circuit 13A includes two first power transmission capacitors Cs1. The two first power transmission capacitors Cs1 are connected in series. The second power transmission resonant circuit 13B is identical to the power transmission resonant circuit 13 according to the first embodiment. Therefore, the description is omitted.

The first power transmission resonant circuit 13A and the second power transmission resonant circuit 13B are connected in parallel to the power supply circuit 11. According to the present embodiment, the first power transmission resonant circuit 13A and the second power transmission resonant circuit 13B are set to the power supply state in a same period. As a result, power can be supplied to two unmanned carrying vehicles VE in the same period.

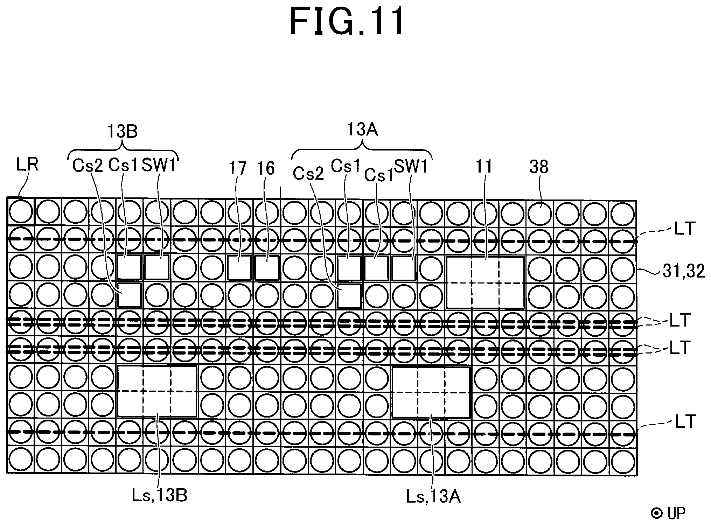

According to the first embodiment, relative positions of the electrical components configuring the power transmission circuit 12 are fixed. The power transmission circuit 12 is housed as a single unit in the housing 30. Specifically, the power transmission circuit 12 is formed on a substrate, and the substrate is housed in the housing 30. Conversely, according to the present embodiment, the plurality of electrical components configuring the power transmission circuit 12 are individually disposed. Here, in Fig. 11, illustration of the cable 25 electrically connecting the electrical components is omitted for convenience.

As shown in Fig. 11, the top-view area of the first switch SW1 is set to be an area in units of unit area LR. The respective top-view areas of the first power transmission capacitor Cs1, the second power transmission capacitor Cs2, the control circuit 16, and the communication unit 17 that are the other electrical components configuring the power transmission resonant circuit 13 are also similarly set.

The power transmission coil Ls of the first transmission resonant circuit 13A and the power transmission coil Ls of the second transmission resonant circuit 13B are arranged side by side along the movement route RO. As a result, power can be wirelessly supplied to two unmanned carrying vehicles VE in the same period.

As shown in Fig. 11, a distance from the power supply circuit 11 to the power transmission coil Ls of the first power transmission resonant circuit 13A is short relative to a distance from the power supply circuit 11 to the power transmission coil Ls of the second transmission resonant circuit 13B. Therefore, a parasitic impedance of the cable 25 from the power supply circuit 11 to the power transmission coil Ls of the first power transmission resonant circuit 13A is less than a parasitic impedance of the cable 25 from the power supply circuit 11 to the power transmission coil Ls of the second transmission resonant circuit 13B. Therefore, in the first transmission resonant circuit 13A, as a result of two first power transmission capacitors Cs1 being provided, compensation for impedance is made and adjustment is made so that the first power transmission resonant circuit 13A is set to the resonant state at the operating frequency. That is, one of the two first power transmission capacitors Cs1 is a capacitor for compensation. Here, the two first power transmission capacitors Cs1 are capacitors having a same capacitance value. As a result of a number of first power transmission capacitors Cs1 to be disposed being adjusted in this manner using the first power transmission capacitors Cs1 that have the same capacitance, work efficiency in the manufacture of the power transmission apparatus 10 can be improved.

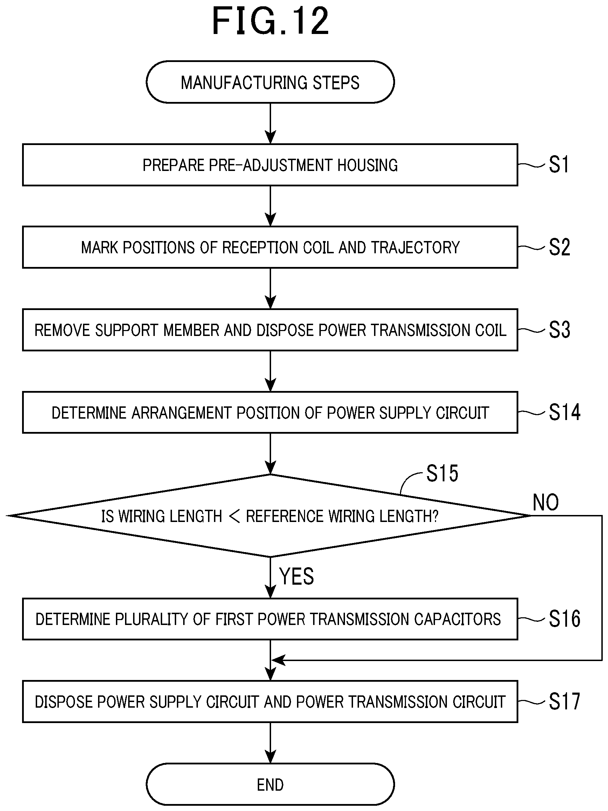

As shown in Fig. 12, in a manner similar to the first embodiment, after the third step S3 is performed, at a fourth step S14, the arrangement position of the power supply circuit 11 on the lower housing surface 31 is determined.

At a fifth step S15, whether a length of the cable 25 serving as wiring from the power supply circuit 11 to the power transmission coil Ls is shorter than a reference wiring length prescribed in advance is determined. When the length of the cable 25 is determined to be shorter than the reference wiring length prescribed in advance, at a sixth step S16, a determination is made that a plurality of the first power transmission capacitors Cs1 serving as reference capacitors having a reference capacitance prescribed in advance are to be disposed as the power transmission resonance capacitor Cs. The reference wiring length is a length at which the power transmission resonant circuit 13 can be set to the resonant state when a single first power transmission capacitor Cs1 is disposed. The reference wiring length is determined in advance through experiments. When the length of the cable 25 is determined to not be shorter than the reference wiring length prescribed in advance, the processing step proceeds to a seventh step S17.

At the seventh step S17, the support members 38 in intended areas in which the power supply circuit 11 and the power transmission resonant circuit 13 are intended to be disposed are removed from the internal space 33. In addition, the power supply circuit 11 and the power transmission resonant circuit 13 are disposed in the intended areas.

In the case of the power transmission apparatus 210 shown in Fig. 11, regarding the second power transmission resonant circuit 13B, the length of the cable 25 may not be shorter than the reference wiring length in some cases. Regarding the first power transmission resonant circuit 13A, the length of the cable 25 may be shorter than the reference wiring length prescribed in advance in some cases. Here, according to the present embodiment, the reference capacitor disposed for compensation is the first power transmission capacitor Cs1. According to another embodiment, the reference capacitor disposed for compensation may be the second power transmission capacitor Cs2.

According to the second embodiment described above, effects similar to those according to the first embodiment are achieved. In addition, the top-view area of the first power transmission capacitor Cs1 is set to be an area in units of unit area LR. The top-view area of the second power transmission capacitor Cs2 is set to be an area in units of unit area LR. As a result, the plurality of support members 38 can be arranged in the area of the lower housing surface 31 excluding the power transmission resonant capacitor Cs. Therefore, when an applied load is exerted onto the upper housing surface 32, because the upper housing surface 32 can be supported by the plurality of support members 38, strength of the power transmission apparatus 10 can be improved.

In addition, the power transmission apparatus 210 includes a plurality of power transmission coils Ls. Furthermore, the plurality of power transmission coils Ls are disposed along the movement route RO. Therefore, power can be wirelessly supplied to a plurality of unmanned carrying vehicles VE in the same period.

Furthermore, manufacturing steps for the power transmission apparatus 210 include the fourth step S14, the fifth step S15, the sixth step S16, and the seventh step S17. At the fifth step S15, whether the length of the cable 25 from the power supply circuit 11 to the power transmission coil Ls is shorter than the reference wiring length prescribed in advance is determined. Then, when the length is determined to be shorter than the reference wiring length, at the sixth step S16, a determination that a plurality of first power transmission capacitors Cs1 are to be disposed is made. As a result of the first power transmission capacitor Cs1 being added, compensation can be made for insufficient impedance of the power transmission resonant circuit 13 and the power transmission resonant circuit 13 can be set to the resonant state at the operating frequency. As a result of the number of first power transmission capacitors Cs1 being adjusted and a circuit constant of the power transmission resonant circuit 13 being adjusted, manufacturing efficiency of the power transmission apparatus 210 can be improved.

### C. Third embodiment

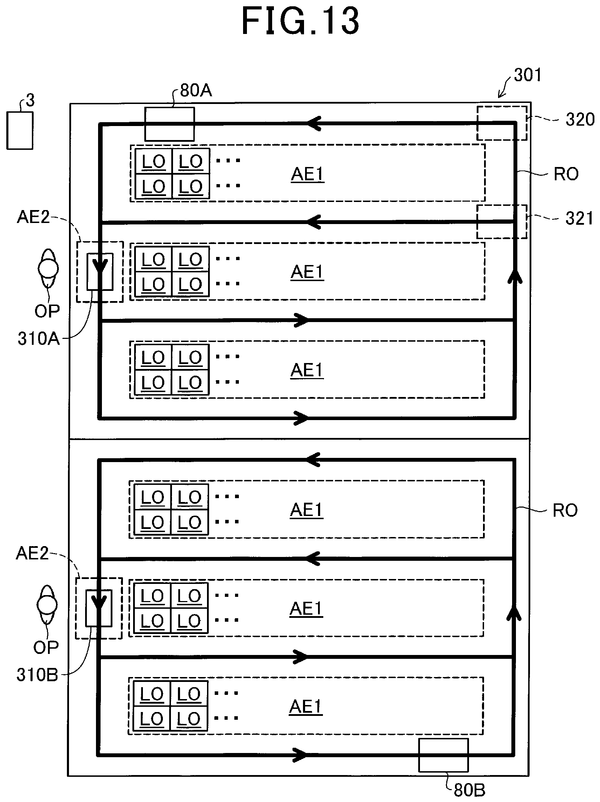

As shown in Fig. 13, a wireless power supply system 301 according to a present embodiment differs from that according to the first embodiment in that two types of power reception apparatuses 80 are provided. Configurations identical to those according to the above-described embodiments are given the same reference numbers. Detailed descriptions are omitted as appropriate. The two types of power reception apparatuses 80 differ from each other in terms of a position of the power reception coil Lr relative to the movement route RO. To distinguish between the two types of power reception apparatuses 80, one power reception apparatus 80 is referred to as a first power reception apparatus 80A, and the other power reception apparatus 80 is referred to as a second power reception apparatus 80B.

The wireless power supply system 301 is such that two types of power transmission apparatuses 310 are disposed to align with the two types of power reception apparatuses 80. To distinguish between the two types of power transmission apparatuses 310, one power transmission apparatus 310 is referred to as a first power transmission apparatus 310A, and the other power transmission apparatus 310 is referred to as a second power transmission apparatus 310B. The first power transmission apparatus 310A and the second power transmission apparatus 310B are such that the positions of the power transmission coils Ls relative to the movement route RO differ from each other.

The first power transmission apparatus 310A and the second power transmission apparatus 310B use a common housing 30. However, a position on the lower housing surface 31 of the power transmission coil Ls of the first power transmission apparatus 310A and a position on the lower housing surface 31 of the power transmission coil Ls of the second power transmission apparatus 310B differ from each other. As a result, the power transmission apparatus 10 accommodating two types of power reception apparatuses 80 can be provided. The power transmission apparatus 310 can be manufactured using the manufacturing method according to the first embodiment, described above. As a result of this manufacturing method, the two types of power transmission apparatuses 310 of which the positions of the power transmission coils Ls relative to the movement route RO differ from each other can be efficiently manufactured using the common housing 30.

According to the third embodiment described above, effects similar to those according to the above-described embodiments are achieved. In addition, the position on the lower housing surface 31 of the power transmission coil Ls of the first power transmission apparatus 310A and the position on the lower housing surface 31 of the power transmission coil Ls of the second power transmission apparatus 310B differ from each other. Therefore, the power transmission apparatus 10 that accommodates two types of power reception apparatuses 80 while using the common housing 30 can be provided.

### D. Other embodiments of the power transmission resonant circuit

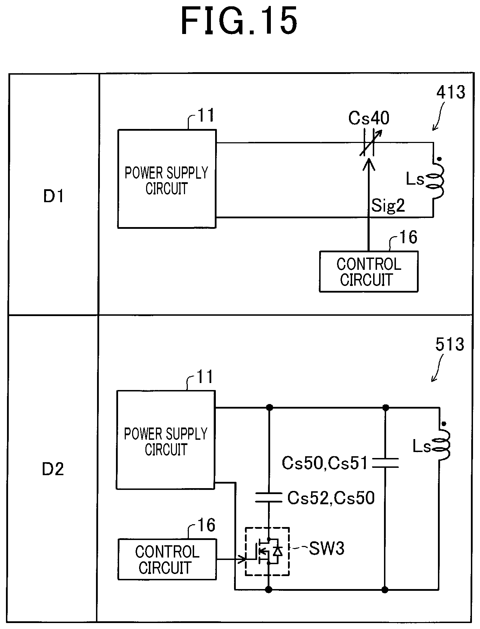

(D1) According to the above-described first embodiment, the power transmission resonant capacitor Cs includes the first power transmission capacitor Cs1 and the second power transmission capacitor Cs2. In addition, the capacitance value of the power transmission resonant capacitor Cs is changed by the state of the first switch SW1 being switched between the conductive state and the non-conductive state. A manner in which the capacitance value of the power transmission resonant capacitor Cs is changed is not limited to that according to the first embodiment. As shown in "D1" in Fig. 15, a power transmission resonant capacitor Cs40 of a power transmission resonant circuit 413 according to a present embodiment is a variable-capacitance capacitor. The power transmission resonant capacitor Cs40 switches the capacitance value between a first capacitance value and a second capacitance value based on a switching signal Sig2 input from the control circuit 16. According to the present embodiment as well, the power transmission resonant circuit 413 switches the state between the resonant state and the non-resonant state by the capacitance value of the power transmission resonant capacitor Cs40 being changed.

(D2) In the power transmission resonant circuit 13 according to the above-described first embodiment, the power transmission resonant capacitor Cs and the power transmission coil Ls form a series resonant circuit. As shown in "D2" in Fig. 15, a power transmission resonant circuit 513 may be a parallel resonant circuit including the power transmission coil Ls and a power transmission resonant capacitor Cs50 connected in parallel to the power transmission coil Ls. The power transmission resonant capacitor Cs50 includes a first power transmission capacitor Cs51 and a second power transmission capacitor Cs52. A third switch SW3 is connected in series to the second power transmission capacitor Cs52. When the third switch SW3 is set to the conductive state, the power transmission resonant circuit 513 is set to the resonant state. When the third switch SW3 is set to the non-conductive state, the power transmission resonant circuit 513 is set to the non-resonant state. According to the present embodiment as well, the power transmission resonant circuit 513 switches the state between the resonant state and the non-resonant state by the capacitance value of the power transmission resonant capacitor Cs50 being changed.

(D3) According to the above-described second embodiment, the power transmission apparatus 210 includes two power transmission resonant circuits 13 that are the first power transmission resonant circuit 13A and the second power transmission resonant circuit 13B. Furthermore, the first power transmission resonant circuit 13A and the second power transmission resonant circuit 13B are set to the power supply state in the same period. According to another embodiment, the first power transmission resonant circuit 13A and the second power transmission resonant circuit 13B may be configured to be successively switched from the standby state to the power supply state. Specifically, the power transmission apparatus 210 is disposed on the movement route RO outside the work area AE2 shown in Fig. 2. Then, the first power transmission resonant circuit 13A and the second power transmission resonant circuit 13B are successively switched from the standby state to the power supply state in correspondence with passage of the target unmanned carrying vehicle VE. As a result, the unmanned carrying vehicle VE can be wirelessly supplied power during a traveling period rather than a period in which traveling is stopped. The power transmission apparatus 210 may include three or more power transmission coils Ls. Furthermore, as shown in Fig. 13, the power transmission apparatus 10 may be disposed in a corner 320 at which the unmanned carrying vehicle VE changes traveling direction, or at an intersection 321, on the movement route RO. At the corner, power can be wirelessly supplied during a longer period of time than when the unmanned carrying vehicle VE is traveling straight ahead, through use of a period during which the unmanned carrying vehicle VE changes the traveling direction.

### E. Other embodiments

(E1) According to the above-described first embodiment, the arranged components are not disposed below the sloped upper surface portion 32b. According to another embodiment, the arranged components may be disposed below the sloped upper surface portion 32b. In addition, although the housing 30 according to the above-described first embodiment has the sloped upper surface portion 32b, the sloped upper surface portion 32b may not be provided. In this case, a slope adjacent to the housing 30 is preferably provided. Furthermore, although the housing 30 according to the above-described first embodiment has the lower housing surface 31, the upper housing surface 32 may not be provided. Moreover, according to the above-described first embodiment, the unit area LR is square. However, the shape of the unit area LR may also be a rectangle or another polygon.

(E2) According to the above-described first embodiment, the power transmission apparatus 10 is such that the power supply circuit 11 and the power transmission circuit 12 are disposed in the internal space 33 of the housing 30. According to another embodiment, the power supply circuit 11 may be disposed outside the housing 30. Alternatively, both the power supply circuit 11 and the power transmission circuit 12 may be disposed outside the housing 30. In addition, according to the first embodiment, the power transmission circuit 12 has the power transmission resonant capacitor Cs, the first switch SW1, the control circuit 16, and the communication unit 17. According to another embodiment, the power transmission circuit 12 may include other circuits. Specifically, the power transmission circuit 12 may include a filter and a protective circuit. The protective circuit is a circuit for interrupting a current to the power reception coil Lr in a case in which, for example, an overcurrent flows to the power reception coil Lr. Furthermore, the power transmission circuit 12 sets the power transmission coil Ls to the standby state by setting the power transmission resonant circuit 13 to the non-resonant state using the first switch SW1. According to another embodiment, the power transmission coil Ls may be set to the standby state by a current to the power transmission resonant circuit 13 being limited through control of the inverter 15 of the power supply circuit 11.

(E3) According to the above-described first embodiment, the moving body in which the power reception apparatus 80 is mounted is the unmanned carrying vehicle VE. The moving body in which the power reception apparatus 80 is mounted is not limited to the unmanned carrying vehicle VE and may be a traveling robot or the like. In addition, according to the above-described first embodiment, the power transmission apparatus 10 is disposed on the floor surface RS inside the warehouse. According to another embodiment, the power supply apparatus 10 may be disposed on a travel road surface on which an outdoor unmanned carrying vehicle VE travels. Specifically, the power transmission apparatus 10 may be disposed on a paved road. Regardless of whether the power transmission apparatus 10 is disposed indoors or outdoors, according to the present disclosure, the power transmission apparatus 10 can be freely disposed so that the position of the power transmission coil Ls is aligned with the position of the power reception coil Lr.

(E4) According to the above-described first embodiment, the unmanned carrying vehicle VE travels by detecting the visible position marker MK with the marker sensor 95. As another mode in which the unmanned carrying vehicle VE travels along the movement route RO, the mode may be such the unmanned carrying vehicle VE travels by the marker sensor 95 detecting a tape that can be magnetically or optically detected, such as a magnetic tape. In addition, the mode may be such the unmanned carrying vehicle VE travels by the marker sensor 95 detecting a radio frequency identification (RFID). Furthermore, the mode may be such that the position marker MK is not disposed on the movement route RO, and the unmanned carrying vehicle VE travels while estimating a current position by detecting a distance to a surrounding object using a measurement apparatus such as light detection and ranging (LiDAR) or image recognition mounted in the unmanned carrying vehicle VE.

(E5) According to the above-described first embodiment, a circuit configuration is a so-called S-S type in which the power transmission resonant capacitor Cs is connected in series to the power transmission coil Ls in the power transmission resonant circuit 13, and the power reception capacitor Cr is connected in series to the power reception coil Lr in the power reception resonant circuit. The circuit configuration of the power transmission resonant circuit 13 and the power reception resonant circuit 83 are not limited to the S-S type.
(a) For example, the circuit configuration may be a so-called P-S type in which the power transmission resonant capacitor Cs is connected in parallel to the power transmission coil Ls in the power transmission resonant circuit 13, and the power reception capacitor Cr is connected in series to the power reception coil Lr in the power reception resonant circuit 83.
(b) In addition, the circuit configuration may be a so-called P-SS type in which, in addition to the power transmission resonant capacitor Cs connected in series to the power transmission coil Ls, a capacitor connected in parallel to the power transmission coil Ls is included, and in the power reception resonant circuit 83, each of two power reception capacitors are respectively connected in series to both terminals of the power reception coil Lr.
(c) Furthermore, the power transmission resonant circuit 13 may include a closed circuit in which the coil and the capacitor are connected in series. The coil of the closed circuit is disposed in a position capable of being magnetically coupled with the power reception coil Lr when the power transmission coil Ls is magnetically coupled with the power reception coil Lr.
(d) In addition, the capacitor of the closed circuit may be connected in parallel, rather than in series, to the coil.
(e) Moreover, the power transmission resonant circuit 13 may include a coil connected in series to the power transmission coil Ls and a capacitor connected in parallel to the coil. This coil is disposed in a position capable of being magnetically coupled with the power reception coil Lr when the power transmission coil and the power reception coil are magnetically coupled.

The present disclosure is not limited to the above-described embodiments and variation examples, and can be implemented by various configurations without departing from the spirit of the invention. For example, technical features according to embodiments and variation examples that correspond to technical features in aspects described in the summary of the invention can be replaced and combined as appropriate to solve some or all of the above-described issued or to achieve some or all of the above-described effects. Furthermore, the technical features may be omitted as appropriate unless described as a requisite in the present specification.

### F. Other aspects

Characteristics of the present disclosure are as follows:

### [Aspect 1]

A power transmission apparatus (10, 210, 310) that wirelessly supplies power to a moving body (VE) including a power reception coil (Lr), the power transmission apparatus including: a housing (30) that is disposed on a travel road surface (RS); and at least one power transmission coil (Ls) that is housed in the housing, in which the housing has an upper housing surface (32) that supports the moving body, and an internal space (33) formed under the upper housing surface, the at least one power transmission coil (Ls) is disposed inside the internal space, and an overall area of the upper housing surface is greater than a top-view area of the at least one power transmission coil.

### [Aspect 2]

The power transmission apparatus according to the aspect 1, further including: an electrical circuit (11, 12) for supplying power to the at least one power transmission coil; and a plurality of support members (38) that are disposed under the upper housing surface and are for supporting the upper housing surface, in which the plurality of support members are disposed in an area of the overall area of the upper housing surface excluding an occupied area of the upper housing surface occupied by the at least one power transmission coil and an occupied area of the upper housing surface occupied by the electrical circuit.

### [Aspect 3]

The power transmission apparatus according to the aspect 1 or 2, in which: the electrical circuit includes a power supply circuit (11) that supplies alternating-current power at an operating frequency to the at least one power transmission coil.

### [Aspect 4]

The power transmission apparatus according to the aspect 2 or 3, in which: the electrical circuit includes a resonant capacitor (Cs) that is electrically connected to the at least one power transmission coil.

### [Aspect 5]

The power transmission apparatus according to the aspect 4, in which: the resonant capacitor is capable of changing a capacitance value between a first capacitance value and a second capacitance value greater than the first capacitance value; and the electrical circuit further includes a control circuit (16) for switching a state of the power transmission coil between a power supply state in which power is wirelessly supplied to the power reception coil and a standby state in which wireless power supply to the power reception coil is stopped, by switching the capacitance value between the first capacitance value and the second capacitance value.

### [Aspect 6]

The power transmission apparatus according to any one of the aspects 2 to 5, in which: the housing further has a lower housing surface (31) that is disposed along the travel road surface; the top-view area of the at least one power transmission coil is set to be a size in units of unit area (LR) dividing an overall area of the lower housing surface into a plurality of areas; and each support member of the plurality of support members is disposed in the unit area.

### [Aspect 7]

The power transmission apparatus according to the aspect 6, in which: the electrical circuit includes a power supply circuit (11) that supplies alternating-current power at an operating frequency to the at least one power transmission coil; and the top-view area of the power supply circuit is set to be a size in units of unit area.

### [Aspect 8]

The power transmission apparatus according to the aspect 6 or 7, in which: the electrical circuit includes a resonant capacitor (Cs) that is electrically connected to the at least one power transmission coil; and the top-view area of the resonant circuit is set to a size in units of unit area.

### [Aspect 9]

The power transmission apparatus according to any one of the aspects 1 to 8, in which: the at least one power transmission coil is disposed along a movement route (RO) prescribed in advance of the moving body.

### [Aspect 10]

The power transmission apparatus according to any one of the aspects 1 to 9, in which: the at least one power transmission coil includes a plurality of power transmission coils.

### [Aspect 11]

The power transmission apparatus according to the aspect 9 or 10, further including: an electrical circuit (11) for supplying power to the at least one power transmission coil; and a plurality of support members (38) that are disposed under the upper housing surface and are for supporting the upper housing surface, in which the moving body includes a plurality of vehicle wheels (90), the plurality of support members are disposed, in the top-view, in positions overlapping a trajectory (LT) on which the plurality of vehicle wheels pass when the moving body travels following the movement route, and the at least one power transmission coil and the electrical circuit are disposed in positions excluding the trajectory in the top view.

### [Aspect 12]

A manufacturing method for a power transmission apparatus (10, 210) that wirelessly supplies power to a moving body (VE) including a power reception coil (Lr), the manufacturing method including: a first step of preparing a pre-adjustment housing (130) that includes (a) a housing (30) that has a lower housing surface (31), an upper housing surface (32) that is disposed above the lower housing surface, and an internal space (33) that is defined by the lower housing surface and the upper housing surface, and (b) a plurality of support members (38) that are disposed between the lower housing surface and the upper housing surface, and are for supporting the upper housing surface, the plurality of support members filling the internal space; a second step (S2) of marking, on the pre-adjustment housing, an opposing position (131) on the lower housing surface opposing the power reception coil when the moving body travels along a movement route (RO) prescribed in advance; and a third step (S3) of removing, among the plurality of support members, some of the support members that are disposed in the opposing position from the internal space and disposing a power transmission coil (Ls) below the opposing position.

### [Aspect 13]

The manufacturing method according to the aspect 12, in which: the power transmission apparatus further includes an electrical circuit (11, 12, 25) including a resonant capacitor (Cs) that is electrically connected to the power transmission coil, a power supply circuit (11) that supplies alternating-current power at an operating frequency to the power transmission coil, and wiring (25) for supplying power from the power supply circuit to the power transmission coil; and the manufacturing method further includes a fourth step (S14) of determining an arrangement position of the power supply circuit on the lower housing surface after the third step, a fifth step (S15) of determining whether a length of the wiring from the power supply circuit to the power transmission coil is shorter than a reference wiring length prescribed in advance, a sixth step (S16) of determining that a plurality of reference capacitors (Cs1) of a reference capacitance prescribed in advance are to be disposed as the resonant capacitor when determined to be shorter than the reference wiring length at the fifth step, and a seventh step (S17) of removing, from the internal space, some of the support members that are among the plurality of support members and in an intended area in which the electrical circuit is intended to be disposed, and disposing the electrical circuit in the intended area.

### [Aspect 14]

A wireless power supply system (301) that wirelessly supplies power to a moving body (VE) including a power reception coil (Lr), the wireless power supply system including: a first power transmission apparatus and a second power transmission apparatus (310A) differing from the first power transmission apparatus (310B), in which the first power transmission apparatus and the second power transmission apparatus each include a housing (30) that is disposed on a travel road surface (RS) and at least one power transmission coil (Ls) that is housed in the housing, the housing has a lower housing surface (31) that is disposed along the travel road surface, an upper housing surface (32) that is disposed above the lower housing surface and supports the moving body, and an internal space (33) that is defined by the lower housing surface and the upper housing surface, the at least one power transmission coil is disposed inside the internal space, a size of the housing of the first power transmission apparatus is the same as a size of the housing of the second power transmission apparatus, and a position on the lower housing surface of the at least one power transmission coil provided in the first power transmission apparatus and a position on the lower housing surface of the at least one power transmission coil provided in the second power transmission apparatus differ from each other.

## Claims

1. A power transmission apparatus (10, 210, 310) that wirelessly supplies power to a moving body (VE) including a power reception coil (Lr), the power transmission apparatus comprising:
a housing (30) that is disposed on a travel road surface (RS); and
at least one power transmission coil (Ls) that is housed in the housing, wherein
the housing has an upper housing surface (32) that supports the moving body, and an internal space (33) formed under the upper housing surface,
the at least one power transmission coil (Ls) is disposed inside the internal space, and
an overall area of the upper housing surface is greater than a top-view area of the at least one power transmission coil.

2. The power transmission apparatus according to claim 1, further comprising:
an electrical circuit (11, 12) for supplying power to the at least one power transmission coil; and
a plurality of support members (38) that are disposed under the upper housing surface and are for supporting the upper housing surface, wherein
the plurality of support members are disposed in an area of the overall area of the upper housing surface excluding an occupied area of the upper housing surface occupied by the at least one power transmission coil and an occupied area of the upper housing surface occupied by the electrical circuit.

3. The power transmission apparatus according to claim 2, wherein:
the electrical circuit includes a power supply circuit (11) that supplies alternating-current power at an operating frequency to the at least one power transmission coil.

4. The power transmission apparatus according to claim 2, wherein:
the electrical circuit includes a resonant capacitor (Cs) that is electrically connected to the at least one power transmission coil.

5. The power transmission apparatus according to claim 4, wherein:
the resonant capacitor is capable of changing a capacitance value between a first capacitance value and a second capacitance value greater than the first capacitance value; and
the electrical circuit further includes a control circuit (16) for switching a state of the power transmission coil between a power supply state in which power is wirelessly supplied to the power reception coil and a standby state in which wireless power supply to the power reception coil is stopped, by switching the capacitance value between the first capacitance value and the second capacitance value.

6. The power transmission apparatus according to claim 2, wherein:
the housing further has a lower housing surface (31) that is disposed along the travel road surface;
the top-view area of the at least one power transmission coil is set to be a size in units of unit area (LR) dividing an overall area of the lower housing surface into a plurality of areas; and
each support member of the plurality of support members is disposed in the unit area.

7. The power transmission apparatus according to claim 6, wherein:
the electrical circuit includes a power supply circuit (11) that supplies alternating-current power at an operating frequency to the at least one power transmission coil; and
the top-view area of the power supply circuit is set to be a size in units of unit area.

8. The power transmission apparatus according to claim 6, wherein:
the electrical circuit includes a resonant capacitor (Cs) that is electrically connected to the at least one power transmission coil; and
the top-view area of the resonant circuit is set to a size in units of unit area.

9. The power transmission apparatus according to claim 1, wherein:
the at least one power transmission coil is disposed along a movement route (RO) prescribed in advance of the moving body.

10. The power transmission apparatus according to claim 9, wherein:
the at least one power transmission coil includes a plurality of power transmission coils.

11. The power transmission apparatus according to claim 9, further comprising:
an electrical circuit (11) for supplying power to the at least one power transmission coil; and
a plurality of support members (38) that are disposed under the upper housing surface and are for supporting the upper housing surface, wherein
the moving body includes a plurality of vehicle wheels (90),
the plurality of support members are disposed, in the top-view, in positions overlapping a trajectory (LT) on which the plurality of vehicle wheels pass when the moving body travels following the movement route, and
the at least one power transmission coil and the electrical circuit are disposed in positions excluding the trajectory in the top view.

12. A manufacturing method for a power transmission apparatus (10, 210) that wirelessly supplies power to a moving body (VE) including a power reception coil (Lr), the manufacturing method comprising:
a first step of preparing a pre-adjustment housing (130) that includes (a) a housing (30) that has a lower housing surface (31), an upper housing surface (32) that is disposed above the lower housing surface, and an internal space (33) that is defined by the lower housing surface and the upper housing surface, and (b) a plurality of support members (38) that are disposed between the lower housing surface and the upper housing surface, and are for supporting the upper housing surface, the plurality of support members filling the internal space;
a second step (S2) of marking, on the pre-adjustment housing, an opposing position (131) on the lower housing surface opposing the power reception coil when the moving body travels along a movement route (RO) prescribed in advance; and
a third step (S3) of removing, among the plurality of support members, some of the support members that are disposed in the opposing position from the internal space and disposing a power transmission coil (Ls) below the opposing position.

13. The manufacturing method according to claim 12, wherein:
the power transmission apparatus further comprises
an electrical circuit (11, 12, 25) including
a resonant capacitor (Cs) that is electrically connected to the power transmission coil,
a power supply circuit (11) that supplies alternating-current power at an operating frequency to the power transmission coil, and
wiring (25) for supplying power from the power supply circuit to the power transmission coil; and
the manufacturing method further comprises
a fourth step (S14) of determining an arrangement position of the power supply circuit on the lower housing surface after the third step,
a fifth step (S15) of determining whether a length of the wiring from the power supply circuit to the power transmission coil is shorter than a reference wiring length prescribed in advance;
a sixth step (S16) of determining that a plurality of reference capacitors (Cs1) of a reference capacitance prescribed in advance are to be disposed as the resonant capacitor when determined to be shorter than the reference wiring length at the fifth step, and
a seventh step (S17) of removing, from the internal space, some of the support members that are among the plurality of support members and in an intended area in which the electrical circuit is intended to be disposed, and disposing the electrical circuit in the intended area.

14. A wireless power supply system (301) that wirelessly supplies power to a moving body (VE) including a power reception coil (Lr), the wireless power supply system comprising:
a first power transmission apparatus and a second power transmission apparatus (310A) differing from the first power transmission apparatus (310B), wherein
the first power transmission apparatus and the second power transmission apparatus each include a housing (30) that is disposed on a travel road surface (RS) and at least one power transmission coil (Ls) that is housed in the housing,
the housing has a lower housing surface (31) that is disposed along the travel road surface, an upper housing surface (32) that is disposed above the lower housing surface and supports the moving body, and an internal space (33) that is defined by the lower housing surface and the upper housing surface,
the at least one power transmission coil is disposed inside the internal space,
a size of the housing of the first power transmission apparatus is a same as a size of the housing of the second power transmission apparatus, and
a position on the lower housing surface of the at least one power transmission coil provided in the first power transmission apparatus and a position on the lower housing surface of the at least one power transmission coil provided in the second power transmission apparatus differ from each other.
